# EUROPEAN PATENT SPECIFICATION

(11) **EP 3 198 879 B1**
(45) Date of publication and mention of the grant of the patent: **13.01.2021**
(21) Application number: 15771878.4
(22) Date of filing: 18.09.2015
(51) Int. Cl.: H04N 21/2389, H04N 21/44, H04N 21/4623, H04N 21/8358, H04N 21/2343, G06T 1/00

(54) **RECEIVER-SIDE MARKING OF CONTENT FOR UNIQUE IDENTIFICATION**
EMPFÄNGERSEITIGES MARKIEREN VON INHALTEN ZUR EINDEUTIGEN IDENTIFIKATION
MARQUAGE DE CONTENU POUR L'INDIFICATION UNIQUE CÔTÉ RÉCEPTEUR

(30) Priority: 25.09.2014 US 201414496589
(43) Date of publication of application: 02.08.2017
(73) Proprietor: Nagravision SA, 1033 Cheseaux-sur-Lausanne (CH)
(72) Inventor: THOMAS, Frédéric, CH-1203 Genève (CH); PONT, José-Emmanuel, CH-1033 Cheseaux-sur-Lausanne (CH); TRAN, Minh Son, F-92340 Bourg la Reine (FR); GUITARD, Frédéric, CH-1009 Pully (CH)
(74) Representative: Ipside
(86) International application number: PCT/EP2015/071423
(87) International publication number: WO 2016/046080

(56) References cited:
- EP-A1- 2 341 708
- US-A1- 2005 028 193
- US-A1- 2010 064 305
- US-A1- 2014 259 086
- DMITRI JARNIKOV ET AL: "Session-based watermarking in live IPTV environment", CONSUMER ELECTRONICS (ICCE), 2012 IEEE INTERNATIONAL CONFERENCE ON, IEEE, 13 January 2012 (2012-01-13), pages 650-653, XP032125038, DOI: 10.1109/ICCE.2012.6162014 ISBN: 978-1-4577-0230-3

## Description

### TECHNICAL FIELD

This document relates to digital content protection and watermarking.

### BACKGROUND

In the field of media content (e.g., video) processing, forensic watermarking or fingerprinting are common techniques to mark the media content to secure it in a reactive manner. Using such techniques, a watermark or a fingerprint is embedded in the media content, whenever it is broadcast or otherwise delivered, to identify the authorized recipient of the media content.

Watermarking involves adding a mark to the media content that is unique to all or a group of consuming users. Watermarking information, such as copyright or content owner information, is typically embedded within the mark in various implementations. Fingerprinting - a specific application of watermarking - involves adding a mark to the media content that is unique to each targeted user.

### SUMMARY

A visible watermark or fingerprint may overcome the drawbacks of analyzing and detecting an invisible watermark or fingerprint, but may degrade the quality of the media content. It would be desirable to transform the portions of the media content, which may be degraded due to a visible watermark or fingerprint, into a smooth, best fitted modification of the visual content of the media content. This may minimize - even dissimulate completely - the impact of the mark on a user that wishes to view the media content.

A series of techniques may be used to render/transform the visual impact of the visual mark. Such rendering/transformation may make such marks imperceptible to a viewer of the media content. The series of techniques may be combined to produce an enhanced fingerprinting technique. For example, a technique may include live video graphics compositing solutions used in applications such as virtual advertisement. As another example, a technique may include Mpeg2 video PID (packet identifier) switching between several different quality media contents.

As yet another example, cryptographic techniques may be used to send secure signaling information between a trusted source of the media content and its destination. As yet another example, a technique may involve hardware (e.g., at the receiver of the media content) based trusted interpretation of signaling information and execution of the PID switching. As will be described with reference to the figures below, these techniques may be used in conjunction with each other together with other techniques in order to produce an enhanced fingerprinting technique.

In one aspect, a method of processing media content is disclosed. Multiple media content streams of the same event and signaling information may be received by a receiver associated with a unique identifier (ID). Each media content stream of the multiple of the media content streams may include a unique rendering of the media content stream. At least one media content stream of the multiple media content streams may be selected using the receiver. The selected at least one media content stream of the multiple media content streams at a time may be provided to a display.

In another aspect, an apparatus for processing media content is disclosed.

The apparatus may include a receiver and a display. The receiver may receive multiple media content streams of the same event and signaling information. Each media content stream of the multiple of the media content streams may include a unique rendering of the media content stream. The receiver may be associated with a unique identifier (ID). The receiver may select at least one media content stream of the multiple media content streams. The display may display the selected at least one media content stream of the multiple media content streams.

In another aspect, a non-transitory machine readable storage medium encoded with instructions for performing a method of processing media content is disclosed.

Instructions to receive multiple media content streams of a same event and signaling information may be encoded, wherein each media content stream of the multiple the media content streams may include a visually unique rendering of the media content stream, and wherein the receiver may be associated with a unique identifier are encoded. Instructions to select, based on the signaling information and the unique identifier, at least one media content stream of the multiple media content streams, may be encoded on the medium. In addition, instructions to provide to a display the selected at least one media content stream of the multiple media content streams may be encoded.

These, and other, aspects are described below in the drawings, the description and the claims. It is worth noting that where the description refers to broadcast media content, the methods described are equally applicable to media content to be delivered by any communication methods including one-to-many broadcast and one-to-one delivery.

### BRIEF DESCRIPTION OF THE DRAWINGS

FIG. 1 depicts an example of a simplified architecture of a media content delivery system.
FIG. 2 depicts an example of a simplified architecture for fingerprinting and distributing media content.
FIG. 3 depicts an example of a graph of multiple media streams, each containing fingerprint marks, being received at a receiver.
FIG. 4 depicts an example of a portion of an architecture with a receiver that may be used to receive multiple media streams, each containing fingerprint marks.
FIG. 5 is a flowchart representation of an example of a technique for fingerprinting media content.
FIG. 6 is a block diagram of an example of an apparatus for watermarking content prior to outputting to a display interface.

### DETAILED DESCRIPTION

The watermarks or fingerprints may be visible as being perceptible to the user viewing the media content or may be hidden or invisible within the media content. There tends to be a trade-off between visibility of a mark and the robustness of the mark in various implementations.

A visible or perceptible watermark or fingerprint may be detected instantaneously, e.g., in the period of time of one frame of video. However, such a visible watermark or fingerprint may degrade the quality of the media content, e.g., by disrupting or obscuring a video viewing experience of a user. A visible or perceptible watermark can also give hackers a cue for the presence of a mark and attracts hackers' efforts to remove or disguise these watermarks. Not necessarily suffering from the same problems, a hidden or invisible watermark or fingerprint, however, may require a comprehensive analysis of the source content and a complex detection process that can be infeasible and non-trivial in many situations. The resistance of an invisible watermark against media transformation, intentional or unintentional, generally appears to be less than the visible counterpart.

A fingerprint mark, embedded in media content, may be used to uniquely identify each user that consumes that media content. Portions of the media content, which may be degraded due to inclusion of a visible watermark or fingerprint, may be transformed into a smooth, best-fit modification of the visual content of the media content. This may minimize the impact of the mark on a user viewing the media content. Various techniques may be used to render or transform the visual impact of the visual mark. Such rendering or transforming may make such marks imperceptible to a viewer of the media content. Such techniques may be combined to produce an enhanced fingerprinting technique.

Video cameras may be used to capture the media content (e.g., video) pertaining to a particular event. During preprocessing, the media content from the video cameras may be processed to uniquely render the media content and include a fingerprint mark. For example, implicit insertion, explicit insertion, and/or object modification techniques may be used to process the media content. The media content processing techniques may be used to produce multiple media content streams of the same event that each may have a fingerprint mark that is different from the other of the multiple media content streams. The multiple media content streams may be distributed or otherwise delivered via a content delivery network together with signaling information to receivers or similar devices. Each of the multiple media content streams containing fingerprint marks may be associated with a unique program identifier (PID). The signaling information may allow for the association of any unique PID to the appropriate one of the multiple media content streams, and may further allow for the association of a unique ID of a receiver (receiving the content streams and signaling information) to one or more unique PIDs and hence to one or more of the multiple media content streams. In some embodiments, at least one of the PIDs (thus, at least one of the media content streams, e.g., two PIDs and media content streams corresponding to bit-symbols "0" and "1") may be selected (e.g., by the receiver) based on the signaling information and the unique ID (e.g., a binary ID - including a specific chain of bit-symbols "0" and "1") of the receiver. As a result of such selections, the rendering of the visual content (e.g., content within the video), that is displayed on a display, may be unique to each destination device.

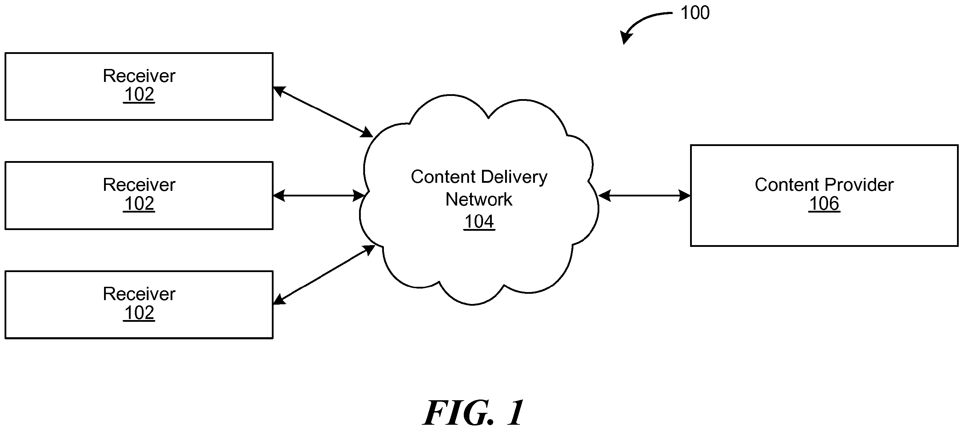

FIG. 1 illustrates an example of a network architecture 100 in which multiple receivers 102 (or equivalently user devices) are communicatively coupled to a content delivery network 104 and configured to receive media content broadcast by a content provider 106. The content provider may be the source of media content (e.g., video). For example, media content provider 106 may be operated by any content delivery operator (e.g., cable providers such as Time Warner and Cox, satellite television operators such as DirecTV, etc.).

A set-top box is provided in association with a receiver 102 for controlling the content to be received by the receiver 102. In various embodiments, a receiver 102 may be external to or could be included within a standalone set-top box. Such a set-top box may be coupled to or may include within it a storage device, e.g., a personal video recorder PVR or a digital video recorder DVR), a computer, a smartphone, a tablet computer and so on. By way of nonlimiting examples, the content delivery network 104 may be a fiber to the curb network, a hybrid fiber coaxial cable network, a satellite network, a wireless network and so on.

In some embodiments, the receiver 102 may be any media content receiving device (receiver). Media content receiving devices usually have a receiver module for receiving content streams and signaling information and selection module or some similar means of filtering or selecting a part of the received content. The media content receiving device may also include a security module for providing secure processing capability to the media content receiving device. Where present, the security module may be configured to provide all or part of the filtering or selecting function described above. The media content receiving device may be associated with a display device for displaying the selected media content. In some cases the display may be part of the media content receiving device, whereas in other cases the display could be a separate device or module configured to be communicably coupled to the media content receiving device. Media content receiving devices may be coupled to or ay include within them a storage medium for storing media content to be played. Examples of suitable media content receiving devices include a computer, a tablet computer, a smartphone, a digital TV, an IPTV, a personal video recorder/player, a digital media player and so on.

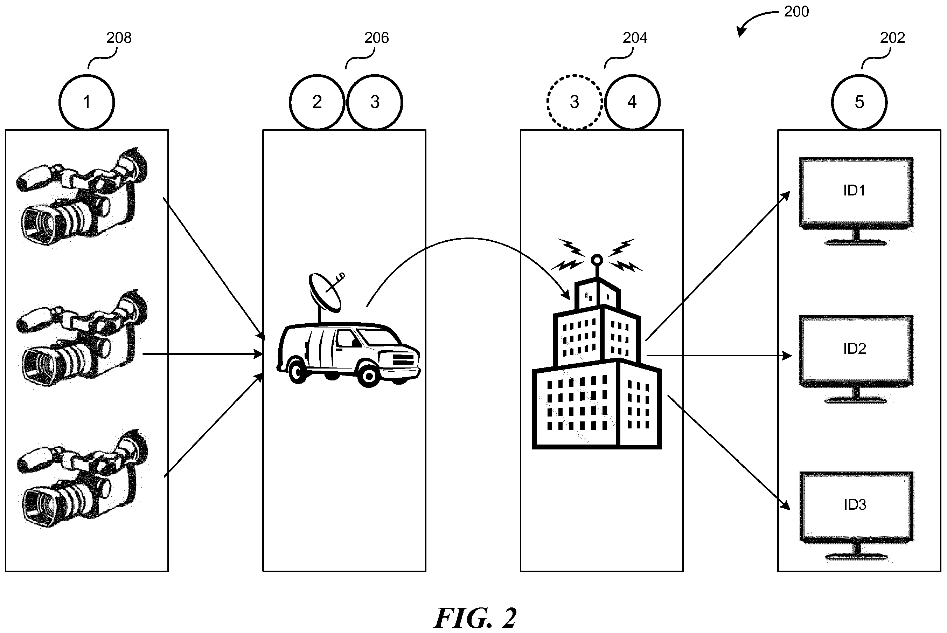

FIG. 2 illustrates an architecture 200 for fingerprinting and distributing media content. Architecture 200 includes video cameras 208, which are each communicatively coupled to preprocessing/production module 206, which is communicatively coupled to network operator module 204, which is communicatively coupled to each of media content receivers 202. The media content receivers 202 may be referred to herein as destination devices and may be similar in form and in function to receivers 102 of FIG. 1. Any of the receivers referred to herein, including media content receivers 202, may be separate and distinct hardware and/or software based devices and/or modules.

Video cameras 208 may be used to capture the media content (e.g., video) pertaining to a particular event. Prior to an event to be broadcast, cameras may be installed and precisely located in an area where the live event may be taking place (e.g. a football stadium, baseball stadium, or a formula one track). Although architecture 200 shows three video cameras 208, any number of cameras may be used in a particular implementation. Video cameras 208 are examples of devices for capturing media content or sources of media content, other suitable device capable of providing or capturing media content may be used in place of video cameras 208, in architecture 200. Video cameras 208 may communicate the media content that they capture to preprocessing/production module 206.

A Preprocessing/production module 206 may process any media content that it receives from video cameras 208. For example, preprocessing/production module 206 may preprocess live media content that is received from video cameras 208. The content captured by the cameras may be processed in real time to facilitate the fingerprint mark embedding process. Several different techniques may be used to preprocess the media content.

A first technique described here can be referred to as explicit insertion. Using this technique, areas within the media content may be delimited. These areas may pertain to particular spatial locations of the event being captured by video cameras 208 and may also pertain to areas within the visual content of the media content. The delimited areas may be allocated to the compositing of a visible mark (i.e., the delimited areas may be a carrier of the fingerprint mark, e.g., a code - or its associated visible appearance). In some embodiments, this technique may be operated in a similar fashion as that of compositing live graphics into media content (such as for virtual advertising).

A second technique described here can be referred to as implicit insertion. Using this technique, the fingerprint mark may be shown as various types of composition effects applied to the flow of the event associated with the media content being captured by video cameras 208. For example, the mark may be inserted at temporal locations that may be determined to be transitions within the visual content of the media content. In particular, transition effects/tricks (e.g., fade-in, fade out, or wipe) may be performed during consecutive snap shots of the event (i.e., at temporal locations of transitions within the visual content of the media content). Using this technique, the appearance of the mark may not introduce any modifications (e.g., new objects or modified objects) of the visual content within the captured media content.

A third technique described here may be referred to as object modification. This technique may be a combination of the explicit insertion and implicit insertion techniques. The visual content within the event associated with the media content being captured by video cameras 208 may be semantically analyzed to identify particular objects and their properties. These objects and/or their properties may be the carrier of the fingerprint mark or may be indicative of the fingerprint mark. For example, in a sports event such as a soccer game, objects such as the pair of goal posts and crossbar associated with the goal, the net associated with the goal, the ball, or the advertising boards surrounding the stadium may each be identified during the semantic analysis process. For each of the identified objects, several appearance properties/attributes may be identified. In particular, properties such as the color, shape, texture or font (as appropriate) associated with a particular object may be identified during the semantic analysis process. Modification of the properties of the objects or the objects themselves may be performed in order to embed/composite the fingerprint mark. For example the shape and/or skin of a goal post within video of a soccer game may be altered - whether grid pattern with a rectangular shape or homogeneous white pattern with an oval shape- to indicate a fingerprint mark.

The disclosed techniques, such as explicit insertion, implicit insertion, and object modification, to enable placement of a fingerprint mark within media content may allow for a smooth, best fitted modification of the visual content within the media content. This may minimize the impact of the fingerprint mark on a user that wishes to view the media content. Although aspects of the media content preprocessing techniques discussed above may be used in other areas such as advertising, the use of the preprocessing techniques to incorporate fingerprint marks as discussed herein is novel and inventive.

While the event is ongoing, a preprocessed media content stream, which is produced using one of the preprocessing techniques using preprocessing/production module 206, discussed above, may be provided to a production team capturing the media content. While the event is ongoing, a preprocessed media content stream, produced using one of the preprocessing techniques discussed above, may instead or at the same time be provided to network operator module 204.

The media content preprocessing techniques, described above, may be used to produce multiple media content streams of the same event. Each of the media content streams may have a fingerprint mark that is different from the other of the multiple media content streams. The visual content of the multiple media content streams may overlap with each other in terms of the time period during the event that which is being captured (e.g., the preprocessed multiple video streams of a soccer game may be captured using the same video camera and may show the exact same time segments of the soccer game). Each of the media content streams may be produced using one or more of the preprocessing techniques above. Each of the multiple media content streams m ay include a uniquely identifying fingerprint mark that is composited into the visual content of the media content stream based on the preprocessing technique that is used.

For a media content stream produced using the explicit insertion technique, the areas that were allocated for the compositing of a visual fingerprint mark may be filled with multiple contents/information within the media content stream. For example, different identification information, such as a distinctive code (or distinctive visible object), may be inserted as a visual fingerprint mark in the allocated areas (e.g., the playing field) of a video stream showing a soccer match.

For a media content stream produced using the implicit insertion technique, the temporal locations of the transitions may already be defined. At each such temporal location, multiple compositional tricks may be inserted into the visual content of the media content stream associated with and indicative of the type of identification information that may constitute a fingerprint mark. For example, particular transition effects/tricks (e.g., fade-in, fade out, or wipe), indicative of the fingerprint mark, may be inserted into the camera transition points of a video stream of a soccer game.

For a media content stream produced using the object modification technique, properties of the particular objects that were identified based on the semantic search may be distinctly varied according to the identification information associated with and indicative of the fingerprint mark to be inserted into the visual content of the media content stream. For example, a straight yellow goal post identified in the video stream of a soccer game may be changed to curved red goal post, and the curved red goal post may be associated with and indicative of a fingerprint mark uniquely identifying the receiver of the video stream.

The multiple media content streams may be produced at the preprocessing/production module 206 and/or by the network operator module 204. The multiple media content streams may have fingerprint marks (as determined by the preprocessing technique above) inserted into the media content streams preprocessing/production module 206 and/or by the network operator module 204. If the identification information associated with the fingerprint mark is to be inserted into the media content streams by the network operator module 204, the preprocessing/production module 206 may signal to the network operator module 204 details of how the identification information should be composited into the media content streams. Such signaling may be performed using any suitable application programming interface (API). For example, REST, SOAP, JavaScript, XML, JSON, RSS, and/or RDF or any other suitable APIs may be used by the preprocessing/production module 206 to send signals to the network operator module 204.

The network operator module 204 (which may be located at the head-end, HE) may transmit the multiple media content streams to the receivers (e.g., multiple receivers 102 of FIG. 1 or receivers 202 of FIG. 2). This may be accomplished by transmitting the media content streams that it receives or generates to the receivers via a content delivery network (e.g., content delivery network 104 of FIG. 1).

The multiple media content streams may be distributed via a content delivery network (e.g., content delivery network 104 of FIG. 1) together with signaling information (e.g., an entitlement control message, ECM, in a conditional access system) to a destination device (e.g., multiple receivers 102 of FIG. 1 or receivers 202 of FIG. 2). The signaling information may be used for signaling parameters for defining the algorithm (e.g. start time, duration, frequency of image changes / composition) that may be used for the generation of the particular fingerprint that may be used for the identification of the destination device. The signaling information may be protected using cryptographic techniques. As examples, any type of public key cryptography, symmetric key cryptography, Internet Protocol Security, Secure Socket Layer, OpenPGP, S/MIME, SSH, and/or any other suitable cryptographic technique may be used to protect the signaling information. The destination device may include secured hardware that may be authenticated by the network operator's content delivery network. The destination device may be identified on the network by a unique identifier (ID). The secured hardware and/or the destination device may be capable of decrypting the signaling information. In addition, the authenticated destination device may be capable of processing any media content and/or media content streams that it receives in the compressed domain.

Each of the multiple media content streams containing fingerprint marks (each such stream may be referred to as an elementary alphabet mark) may be associated with a unique program identifier (PID). The signaling information may allow for the association of any unique PID to the appropriate one of the multiple media content streams, and hence further allow for the association of a unique ID of the destination device (e.g., an ID that defines a string of several successive alphabet marks) to one or more unique PIDs corresponding to one or more of the multiple media content streams. In other words, the signaling information may instruct the destination device about how to compose the multiple media content streams from the unique PIDs.

In some embodiments, at least one of the PIDs (thus, at least one of the media content streams) may be selected (e.g., by the destination device) based on the signaling information and the unique ID of the destination device. For example, each media content stream may be associated with a fixed unique ID of the destination device. In some embodiments, multiple of the PIDs (thus, multiple of the media content streams) may be selected and an order in which the destination device should switch between the selected PIDs (the selected media content streams) may be determined based on the signaling information and the unique ID of the destination device. As a result of such selections and determinations, the rendering of the visual content (e.g., content within the video), that is displayed on a display (coupled to the destination device), may be unique to each destination device. For example, this may be possible because each media content stream may be assigned to a mark associated with the sequential order of the media content streams (e.g., a stream for symbol "0" and one stream for symbol "1") in form of, e.g., successive symbols. If the unique ID of the destination device is a string of these, e.g. binary, symbols, toggling between two streams in an order corresponding to each successive symbol of the unique ID will render a visual content uniquely to each destination device.

In some embodiments, the generation and decryption of the signaling information, the switching between the PIDs, and the use of the unique ID of the destination device to make selections/determinations of PIDs may each be performed in software. The destination device may be any receiver referred to herein. In some embodiments, the destination device may be a decoder device that may be internal to or external to the receiver. For example, the destination device may be a decoder device in the distribution network (e.g., content delivery network 104 of FIG. 1). As another example, the destination device may be a decoder device or CAM used for hospitality services.

There may be a tradeoff between the number of media content streams that may be generated at the preprocessing/production module 206 and/or by the network operator module 204 and transmitted to the receivers 202 and the amount of bandwidth that is consumed by the streams. The bandwidth may be configurable, and there may be a tradeoff between the robustness of the fingerprinting, e.g., based on the number of streams that may be generated, or based on whether fingerprinting is on or off, and the amount of bandwidth that is available for other content within the media content streams. For example, fingerprint marks may be shown rapidly, e.g., to avoid collusion attacks, or over a longer period of time e.g., when the mark is not obtrusive. As another example, the IDs referred to herein may be long, e.g., to avoid collusion attacks, or may be short. In some cases the data for additional media content streams, and/or the fingerprint mark information therein, may be sent using variable bit rate (VBR) encoding, or using statistical multiplexing, and/or any other suitable techniques that may allow for sufficient bandwidth for the streams or additional bandwidth for additional content and/or information. Such additional bandwidth may increase the quality of the media content, may increase the quality of service, and/or increase customer satisfaction.

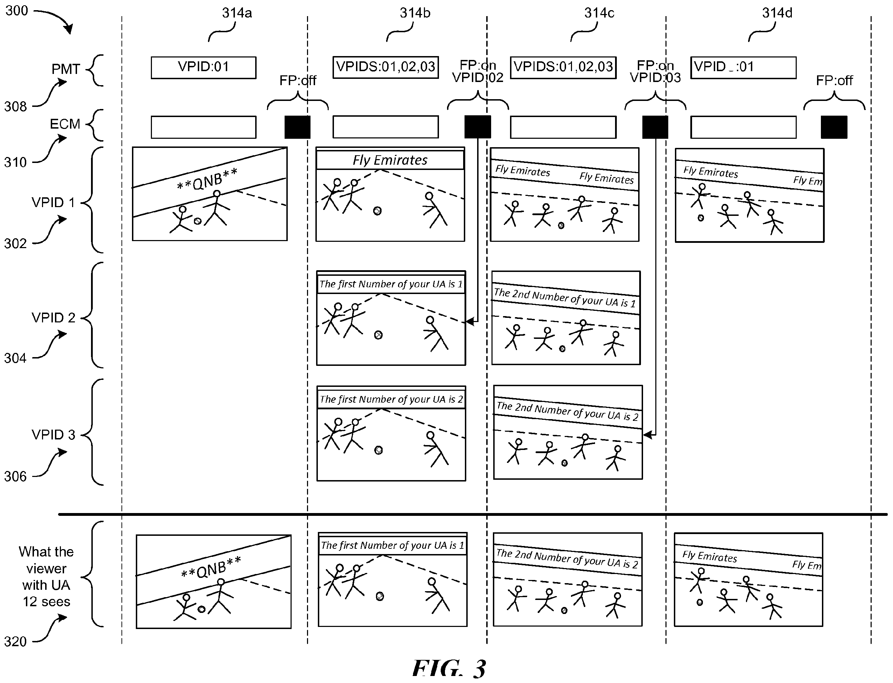

FIG. 3 depicts an example of a graph 300 of multiple media streams, each containing fingerprint marks, being received at a receiver (e.g., one of multiple receivers 102 of FIG. 1 or one of receivers 202 of FIG. 2). Multiple media streams 302, 304, and 306, with their respective PIDs VPID 1, VPID 2, and VPID 3 (each in a different row of graph 300) may be available at the receiver. Segments of time 314 are shown in the columns of graph 300 as 314a, 314b, 314c and 314d. Graph 300 also shows a Program Map Table (PMT) 308, in the top row of graph 300, which includes information about which PIDs (and their associated media streams) are available at the receiver. In addition, graph 300 shows the signaling information 310 (in row 310 of graph 300) that is received by the receiver. The signaling information may indicate whether fingerprinting at the receiver is turned on or off and may also indicate an order in which the receiver should switch between the PIDs (and thus, switch between the received the media content streams). Row 320 of graph 300 shows the media streams that may be displayed on the display coupled to the receiver, at different segments of times 314, viz., 314a, 314b, 314c and 314d.

For example, during time segment 314a, signaling information 310 may indicate that fingerprinting is turned off, the PMT may indicate that VPID 1 is available, the media content stream 302 associated with VPID 1 may be available at the receiver, and this stream may be displayed (as shown in row 320 of graph 300) on a display. As another example, during time segment 314b, signaling information 310 may indicate that fingerprinting is turned on and that the receiver should switch to VPID 2, the PMT may indicate that VPID 1, VPID 2, and VPID 3 are available, the media content streams, 302, 304, and 306 associated respectively with VPID 1, VPID 2, and VPID 3 may be available at the receiver, and the stream 304 associated with VPID 2 may be displayed (as shown in row 320 of graph 300) on a display. As yet another example, during time segment 314c, signaling information 310 may indicate that fingerprinting is turned on and that the receiver should switch to VPID 3, the PMT may indicate that VPID 1, VPID 2, and VPID 3 are available, the media content streams, 302, 304, and 306 associated respectively with VPID 1, VPID 2, and VPID 3 may be available at the receiver, and the stream 304 associated with VPID 3 may be displayed (as shown in row 320 of graph 300) on a display. As yet another example, during time segment 314d, signaling information 310 may indicate that fingerprinting is turned off, the PMT may indicate that VPID 1 is available, the media content stream 302 associated with VPID 1 may be available at the receiver, and this stream may be displayed (as shown in row 320 of graph 300) on a display.

It will be appreciated that using a sequence of switching among the visually unique, versions, based on their PIDs provides the opportunity to create a unique mapping between receiver identifications, and a unique switching pattern associated with the receiver ID. The unique mapping also makes it possible to identify a receiver from which a given video clip came from by forensically analyzing the video clip and identifying the switching pattern that generated the video clip.

In addition to the switching pattern, additional unique one-to-one correspondence may be established between a video clip and a receiver by using different scene change techniques when changing from one video PID to another. Several scene change techniques are well known in the art. These include fade-in, fade-out, tile-in, tile-out, starburst, and so on. Using the signaling information 310, rather than using PIDs to have a sequence of switching among the received visually unique versions of a media content stream, a receiver could be told to (possibly generate and) use a specific scene transition technique when switching from one PID to another, further adding to the unique relationship between the output thus generated and the identity of the receiver.

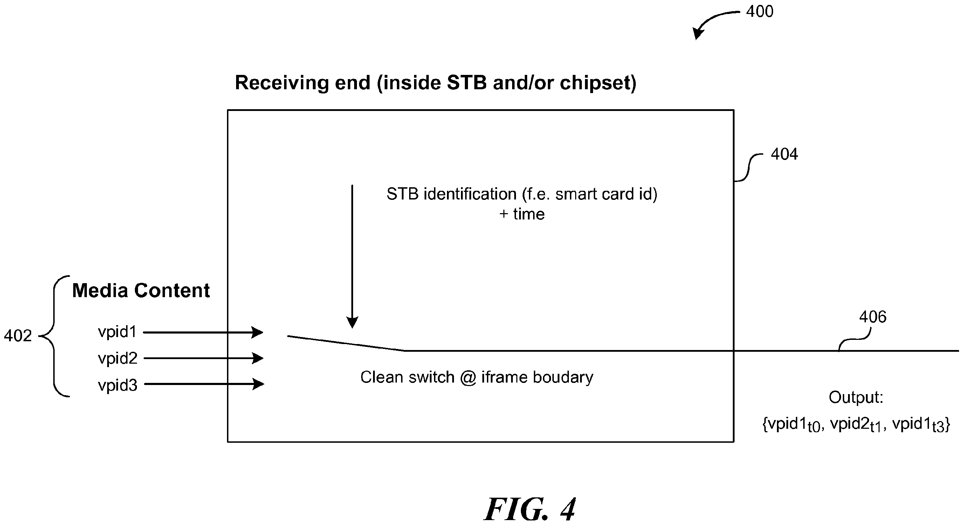

FIG. 4 depicts a portion of an example of an architecture 400 with a receiver 404 (similar in form and in function to one of multiple receivers 102 of FIG. 1 or one of receivers 202 of FIG. 2) that may be used to receive multiple media streams, each containing fingerprint marks. In architecture 400, a signal 402 that includes multiple media streams associated with PIDs VPID 1, VPID 2, and VPID 3 (similar to what is shown by multiple media streams 302, 304, and 306 of FIG. 3) may be available at the receiver 404. In addition, the receiver 404 may receive the signaling information, e.g., signaling information 310 of FIG. 3. The signaling information may indicate whether fingerprinting at the receiver 404 is turned on or off. In some embodiments, the signaling information may also indicate an order in which the receiver 404 may switch between the PIDs, and thus, switch between the received the media content streams.

For example, the receiver 404 may switch between the PIDs at regular intervals based on the unique identifier (ID) of the receiver (i.e., the unique ID of the destination device). In particular, any suitable algorithm may be used to map the unique ID of the receiver 404 to a symbol sequence indicating the determined order in which the receiver can switch between the PIDs. Such a mapping may depend on the number of symbols available and/or the amount of error correction that may be needed within the media content streams. In addition, the algorithm may be used to map the unique ID to a frequency with which the receiver 404 should switch between the PIDs, possibly in the determined order of switching.

In some embodiments, the receiver 404 may be controlled securely via secure messages sent from the head-end (HE), such as secure messages sent from network operator module 204 of FIG. 2. In other embodiments the receiver 404 may be controlled by internal or external software and/or hardware. In some embodiments, the signaling information (e.g., an entitlement control message, ECM) may be encrypted for decryption by the receiver 404. A secure processor within or external to the receiver 404 may decrypt the signaling information to extract information regarding a video decryption key, e.g., information to descramble the media streams that are received by the receiver 404, and fingerprint parameters, e.g., whether fingerprinting at the receiver is turned on or off, and an order in which to switch between PIDs associated with the media content streams. The key may be placed in a descrambler register (not shown) within the receiver 404, for example, by the secure processor. The secure processor may control a hardware block or software module on the receiver 404 to switch between the PIDs (and thus the received the media content streams). The switching between the PIDs may be based on the unique identifier (ID) of the receiver. The receiver 404 may produce output 406 of the successive portions or segments of media content streams on a display interface (e.g., to be displayed on a display).

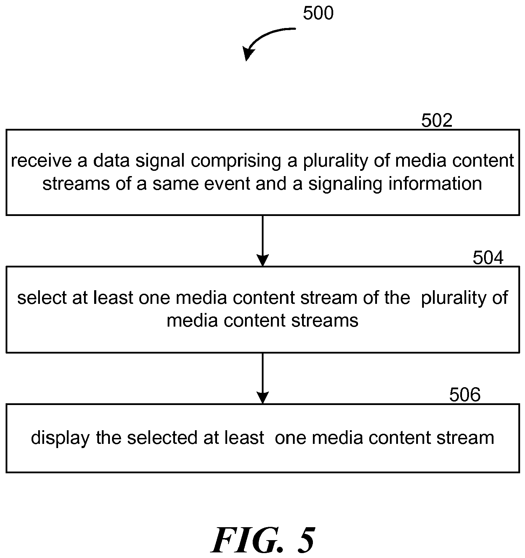

FIG. 5 is a flowchart representation of a technique 500 for processing received media content. Technique 500 may be used for receiving media content, broadcast or otherwise, in which portions of the media content have been transformed (to include a fingerprint mark) into a smooth, best-fit modification of the visual content of the media content. Such a technique may minimize the impact of a fingerprint mark, which, using traditional techniques, may otherwise degrade the visual content, perceived by a user who views the media content.

Various processing techniques, as discussed above, may be used to preprocess the media content to produce multiple media content streams (possibly temporally overlapping streams of an event). The streams may be transmitted to a receiver (e.g., a destination device, one of receivers 102 of FIG. 1, one of receivers 202 of FIG. 2, and/or receiver 404 of FIG. 4).

At 502, a data signal that includes multiple media content streams of the same event and signaling information may be received by a receiver (e.g., a destination device, one of receivers 102 of FIG. 1, one of receivers 202 of FIG. 2, and/or receiver 404 of FIG. 4). The data signal may be, e.g., an MPEG transport stream from a satellite transponder, or a received digital cable signal, or over-the-air signal, and so on. Each media content stream of the multiple of the media content streams may include a visually unique rendering of the media content stream. The receiver may be associated with a unique identifier (ID). For example, the unique rendering of a media content may be produced using the explicit insertion technique, the implicit insertion technique, the object modification technique, and/or any other suitable technique, as discussed herein. In some embodiments, the signaling information may be encrypted for decryption by the receiver 404. For example, the signaling information may be sent by including within an ECM, which is a secure message for conveying control information in conditional access. As another example, the signaling information may be sent "in-band", in a private data syntax within the media content stream, such as in private data section of an adaptation field of TS packets (of the same PID), in private PES, etc. Although a few examples are given, other suitable protection schemes and/or encryption schemes for sending signaling information may be used. A secure processor within or external to the receiver 404 may decrypt the signaling information to extract information regarding a video key (e.g., information to descramble the media streams that are received by the receiver 404) and fingerprint parameters (e.g., whether fingerprinting at the receiver is turned on or off, and an order in which to switch between PIDs associated with the media content streams).

At 504, at least one media content stream of the multiple media content streams may be selected using the receiver (e.g., a destination device, one of receivers 102 of FIG. 1, one of receivers 202 of FIG. 2, and/or receiver 404 of FIG. 4), based on the signaling information and the unique ID. In some embodiments, at least one of the PIDs (thus, at least one of the media content streams) may be selected by the receiver, based on the signaling information and the unique ID of the receiver. For example, each media content stream may be associated/dedicated to a fixed ID and/or user (e.g., this may be a general case of streaming on demand). In some embodiments, multiple of the PIDs (thus, multiple of the media content streams) may be selected, by the receiver, and an order in which the receiver should switch between the selected PIDs (the selected media content streams) may be determined based on the signaling information and the unique ID of the receiver. In particular, the signaling information may include information regarding the order in which to switch between PIDs associated with the media content streams. The order may be uniquely determined by the unique ID associated with the receiver. For example, this may be possible because each media content stream may be assigned to an alphabet mark (e.g., a stream for symbol "0" and one stream for symbol "1",). If the unique ID of the destination device is a string of these, e.g. binary, symbols, toggling between two streams in an order corresponding to each successive symbol of the unique ID will render a visual content uniquely to each destination device.

At 506, the selected at least one media content stream (or the switching-derived stream) of the multiple media content streams may be provided to a display interface. The display interface may provide signals that can be displayed on a display. The display, which may be used to render visual content, may be a part of the receiver or may be a device that is distinct from the receiver. For example, as a result of the selections and determinations at 504, the rendering of the visual content (e.g., content within a video) within the selected media content stream(s), that is displayed on a display (e.g., coupled to the receiver), may be unique to each receiver that receives the selected stream(s).

It should be understood that the above steps of the technique described above may be executed or performed in any order or sequence not limited to the order and sequence shown and described in the preceding figures. Additionally, some of the above steps may be executed or performed substantially simultaneously where appropriate or in parallel to reduce latency and processing times.

In some embodiments, an apparatus for fingerprinting media content includes a receiver and a display. The media content may be suitable for broadcasting or for delivery by any other media delivery technique. The receiver is able to receive a data signal that includes a plurality of media content streams of a same event and signaling information, wherein each media content stream of the plurality of the media content streams includes a visually unique rendering of the media content stream. The receiver is associated with a unique identifier. The receiver can select, based on the signaling information and the unique identifier, at least one media content stream of the plurality of media content streams. The display can display the selected at least one media content stream of the plurality of media content streams.

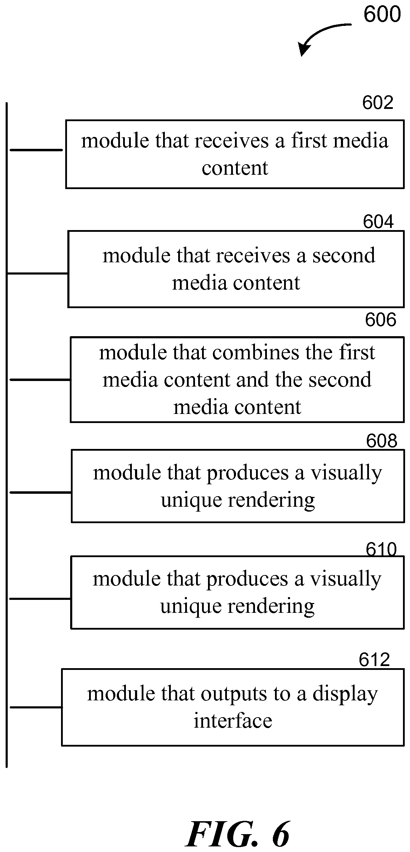

FIG. 6 is a block diagram representation of an example of an apparatus 600 for processing media content for outputting to a display interface, the media content being suitable for broadcast or any other delivery means. The module 602 receives a first media content stream. The first media content in the first media content stream could be, e.g., a video or an audio program. The module 604 receives a second media content stream wherein the second media content stream, in combination with the first media content, generates a visually unique rendering, e.g., of the first media content. In some embodiments, the second media content stream may carry a content that is similar, e.g., a second camera angle of the same event, to the video content received by module 602, e.g., programs 402 depicted in Fig. 4. In some embodiments, the second media content stream may include information about a video object that may be blended or displayed on top of the first media content when being displayed via a display interface.

The module 606 (e.g., the combiner module) combines the second media content with the first media content. The module 608 (e.g., a control module) receives a control signal. In some embodiments, the control signal may be encrypted for secure delivery to the apparatus 600. The control signal may define how the second media content is to be combined with the first media content prior to outputting to a display interface.

The module 610 (e.g., the output generation module) generates an output video signal by producing a visually unique rendering of the first media content combined with the second media content under the control of the control module 608. The visually unique rendering may be, e.g., based on insertion of the second media content (e.g., an advertisement or a logo) into the first media content. The visually unique rendering may be based on the previously described techniques of different transition effects and a sequencing thereof. The module 612 (e.g., the display interface module) outputs the output video signal to a display interface. For example, the combined video may be output to a digital or an analog video output interface such as a network interface, or an HDMI or USB interface, and so on.

In some embodiments, the apparatus 600 further includes a display that displays the output video signal. In some embodiments, the visually unique rendering includes a visible mark composited in a display area within the video program, as specified by the control signal. For example, as depicted in FIG. 3, discussed herein, different advertisements may be inserted in a pre-designated screen display area within a video may be possible. The control signal may specify visual characteristics of the video objects that can be blended into or placed on top of the video program to generate visually unique video content. As described herein, the visual characteristics may include size, shape, color, occlusion, etc. of a video object.

In some embodiments, the visually unique rendering includes a mode of transition from a first combination of the video content and the second media content stream and a second combination of the video content and the second media content stream. For example, the apparatus 600 may be able to transition between different segments of the video content using a variety of transition techniques such as fade-in, fade-out, spiral in, spiral out, checker box in, checker box out, etc. The control signal may specify the PID used for video content and may also specify the scene transition effect to be used when video PID is switched under control of the control signal.

In some embodiments, the control module receives the watermark signal in an encrypted format (e.g., an ECM). In some embodiments, the control signal includes a signal to turn on and turn off the combining of the video content and the second media content.

In some embodiments, the output generation module generates the output video signal by combining different visual objects from the second media content stream at different times with the video content, as controlled by the control signal.

It will be appreciated that several techniques have been described to watermark content when being output from a receiver. The input to the receiver may include a limited number of visually unique versions of content that are broadcast or otherwise delivered to many receivers. Based on the identity of the receiver, a unique combination of the visually unique versions may be performed such that, given the output video, it is possible to find out which particular receiver the output video came from.

It will further be appreciated that using the disclosed techniques, an output video of a receiver can be uniquely identified with the receiver that produced it based on one or more of switching between visually unique versions of a content, a switching pattern between different visually unique versions, scene transition techniques used when switching from one visually unique version to another, and so on.

The disclosed and other embodiments, the functional operations and modules described in this document (e.g., receivers, processors, storage devices, video cameras preprocessing/production modules, network operator modules, media content processing devices, etc.) can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, which is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network.

The techniques and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this document contains many specifics, these should not be construed as limitations on the scope of an invention that is claimed, but rather as descriptions of features specific to particular embodiments. Similarly, while operations are depicted in the drawings in a particular order, this should not be understood as requiring that such operations be performed in the particular order shown or in sequential order, or that all illustrated operations be performed, to achieve desirable results.

The various modules (e.g., receivers, processors, storage devices, video cameras preprocessing/production modules, network operator modules, media content processing devices, etc.) described herein, any of the techniques disclosed above, and the embodiments described herein may be encoded on computer readable media. Computer readable media includes any media capable of storing data. The computer readable media may be transitory, including, but not limited to, propagating electrical or electromagnetic signals, or may be non-transitory including, but not limited to, volatile and non-volatile computer memory or storage devices such as a hard disk, floppy disk, USB drive, DVD, CD, media cards, register memory, processor caches, Random Access Memory ("RAM"), etc.

Only a few examples and implementations are disclosed. Variations, modifications, and enhancements to the described examples and implementations and other implementations can be made based on what is disclosed.

## Claims

1. A method of processing media content, comprising: receiving, using a receiver (102, 202 or 404) associated with a unique identifier (ID), a data signal including a plurality of media content streams of a same event and signaling information, wherein each media content stream of the plurality of the media content streams includes a visually unique rendering of the media content stream; selecting, using the receiver, based on the signaling information and the unique identifier (ID), at least one media content stream of the plurality of media content streams; and providing, to a display interface, the selected at least one media content stream of the plurality of media content streams, **characterized in that**, each media content stream of said plurality of media content streams being assigned to a corresponding symbol, the unique identifier being a string of these symbols, said selection is a sequence of switching corresponding to a toggling between media content streams in an order corresponding to each successive symbol of the unique identifier.

2. The method of claim 1, wherein the signaling information includes a program identifier (PID) information.

3. The method of claim 1, wherein the visually unique rendering includes embedding a visible fingerprint mark composited in an area within a visual content of the selected at least one media content stream.

4. The method of claim 1, wherein the unique rendering includes a fingerprint mark composited during the temporal locations of transitions within a visual content of the selected at least one media content stream.

5. The method of claim 1, wherein the signaling information is encrypted for decryption by the receiver.

6. The method of claim 1, wherein the selecting at least one media content stream of the plurality of media content streams includes selecting two or more of the plurality of media content streams.

7. An apparatus (600) for processing media content, comprising: a module (602) that receives a first media content; a module (604) that receives a second media content; a combiner module (606) that combines the first media content with the second media content; a control module (608) that receives a control signal and controls, using the control signal, operation of the combiner module and an output generation module (610); wherein the output generation module (610) produces a visually unique rendering of the first media content and the second media content under control of the control module; and a display interface module (612) that outputs the output video signal to a display interface, **characterized in that**, each media content stream of said plurality of media content streams being assigned to a corresponding symbol, the unique identifier being a string of these symbols, said selection is a sequence of switching corresponding to a toggling between media content streams in an order corresponding to each successive symbol of the unique identifier.

8. The apparatus (600) of claim 7, wherein the first media content is a video program and wherein the visually unique rendering includes a visible mark composited in a display area within the first media content, as specified by the control signal.

9. The apparatus (600) of claim 7, wherein the control module (608) receives the control signal in an encrypted format.

10. The apparatus (600) of claim 7, wherein the control signal includes a signal to turn on and turn off the combining of the first media content and the second media content.

11. A non-transitory machine readable storage medium encoded with instructions for processing media content, comprising: instructions to receive, using a receiver (102, 202 or 404) associated with a unique identifier (ID), a data signal including a plurality of media content streams of a same event and signaling information, wherein each media content stream of the plurality of the media content streams includes a visually unique rendering of the media content stream; instructions to select, using the receiver, based on the signaling information and the unique identifier (ID), at least one media content stream of the plurality of media content streams; instructions to cause to display, to a display interface, the selected at least one media content stream of the plurality of media content streams, **characterized in that**, each media content stream of said plurality of media content streams being assigned to a corresponding symbol, the unique identifier being a string of these symbols, said selection is a sequence of switching corresponding to a toggling between media content streams in an order corresponding to each successive symbol of the unique identifier.

12. The non-transitory machine readable storage medium of claim 11, wherein the signaling information includes a program identifier (PID) information.

13. The non-transitory machine readable storage medium of claim 11, wherein the unique rendering includes a visible fingerprint mark composited in an area within a visual content of the selected at least one media content stream.

14. The non-transitory machine readable storage medium of claim 11, wherein the unique rendering includes a fingerprint mark composited during the temporal locations of transitions within a visual content of the selected at least one media content stream.

15. The non-transitory machine readable storage medium of claim 11, wherein the signaling information is encrypted for decryption by the receiver.

16. The non-transitory machine readable storage medium of claim 11, wherein the instructions to select at least one media content stream of the plurality of media content streams include instructions to select two or more of the plurality of media content streams.

## Patentansprüche

1. Verfahren zum Verarbeiten von Medieninhalt, Folgendes umfassend: Empfangen, unter Verwendung eines Empfängers (102, 202 oder 404) in Verbindung mit einer eindeutigen Identifikation (ID), eines Datensignals, welches eine Vielzahl von Medieninhaltströmen eines selben Ereignisses und Signalisierungsinformationen beinhaltet, wobei jeder Medieninhaltstrom der Vielzahl von Medieninhaltströmen eine visuell eindeutige Wiedergabe des Medieninhaltstroms beinhaltet; Auswählen, unter Verwendung des Empfängers, basierend auf den Signalisierungsinformationen und der eindeutigen Identifikation (ID) mindestens eines Medieninhaltstroms aus der Vielzahl von Medieninhaltströmen; und Bereitstellen, für eine Anzeigeschnittstelle, des ausgewählten mindestens einen Medieninhaltstroms der Vielzahl von Medieninhaltströmen, **dadurch gekennzeichnet, dass** jeder Medieninhaltstrom der Vielzahl von Medieninhaltströmen einem entsprechenden Symbol zugewiesen ist, die eindeutige Identifikation eine Kette dieser Symbole ist, wobei die Auswahl eine Schaltfolge ist, die einem Umschalten zwischen Medieninhaltströmen in einer Reihenfolge entspricht, die jedem aufeinanderfolgenden Symbol der eindeutigen Identifikation entspricht.

2. Verfahren nach Anspruch 1, wobei die Signalisierungsinformationen Programmidentifikations-, (PID)-Informationen beinhalten.

3. Verfahren nach Anspruch 1, wobei die visuell eindeutige Wiedergabe das Einbetten einer sichtbaren Fingerabdruckmarkierung beinhaltet, die in einem Bereich innerhalb eines visuellen Inhalts des ausgewählten mindestens einen Medieninhaltstroms zusammengesetzt ist.

4. Verfahren nach Anspruch 1, wobei die eindeutige Wiedergabe eine Fingerabdruckmarkierung beinhaltet, die während der Zeitpunkte von Übergängen innerhalb eines visuellen Inhalts des ausgewählten mindestens einen Medieninhaltstroms zusammengesetzt ist.

5. Verfahren nach Anspruch 1, wobei die Signalisierungsinformationen zur Entschlüsselung durch den Empfänger verschlüsselt sind.

6. Verfahren nach Anspruch 1, wobei das Auswählen mindestens eines Medieninhaltstroms der Vielzahl von Medieninhaltströmen das Auswählen von zwei oder mehr der Vielzahl von Medieninhaltströmen beinhaltet.

7. Einrichtung (600) zum Verarbeiten von Medieninhalt, Folgendes umfassend: ein Modul (602), das einen ersten Medieninhalt empfängt; ein Modul (604), das einen zweiten Medieninhalt empfängt; ein Kombinierermodul (606), das den ersten Medieninhalt mit dem zweiten Medieninhalt kombiniert; ein Steuermodul (608), das ein Steuersignal empfängt, und unter Verwendung des Steuersignals einen Betrieb des Kombinierermoduls und eines Ausgangsgenerierungsmoduls (610) steuert; wobei das Ausgangsgenerierungsmodul (610) eine visuell eindeutige Wiedergabe des ersten Medieninhalts und des zweiten Medieninhalts unter der Steuerung des Steuermoduls erzeugt; und ein Anzeigeschnittstellenmodul (612), das das Ausgangsvideosignal zu einer Anzeigeschnittstelle ausgibt, **dadurch gekennzeichnet, dass** jeder Medieninhaltstrom der Vielzahl von Medieninhaltströmen einem entsprechenden Symbol zugewiesen ist, wobei die eindeutige Identifikation eine Kette dieser Symbole ist, wobei die Auswahl eine Schaltfolge ist, die einem Umschalten zwischen Medieninhaltströmen in einer Reihenfolge entspricht, die jedem aufeinanderfolgenden Symbol der eindeutigen Identifikation entspricht.

8. Einrichtung (600) nach Anspruch 7, wobei der erste Medieninhalt ein Videoprogramm ist, und wobei die visuell eindeutige Wiedergabe eine sichtbare Markierung beinhaltet, die in einem Anzeigebereich innerhalb des ersten Medieninhalts, wie von dem Steuersignal spezifiziert, zusammengesetzt ist.

9. Einrichtung (600) nach Anspruch 7, wobei das Steuermodul (608) das Steuersignal in einem verschlüsselten Format empfängt.

10. Einrichtung (600) nach Anspruch 7, wobei das Steuersignal ein Signal beinhaltet, um das Kombinieren des ersten Medieninhalts und des zweiten Medieninhalts einzuschalten und auszuschalten.

11. Nicht transitorisches maschinenlesbares Speichermedium, das mit Anweisungen zur Verarbeitung von Medieninhalt codiert ist, Folgendes umfassend: Anweisungen zum Empfangen, unter Verwendung eines Empfängers (102, 202 oder 404) in Verbindung mit einer eindeutigen Identifikation (ID), eines Datensignals, welches eine Vielzahl von Medieninhaltströmen eines selben Ereignisses und Signalisierungsinformationen beinhaltet, wobei jeder Medieninhaltstrom der Vielzahl von Medieninhaltströmen eine visuell eindeutige Wiedergabe des Medieninhaltstroms beinhaltet; Anweisungen zum Auswählen, unter Verwendung des Empfängers, basierend auf den Signalisierungsinformationen und der eindeutigen Identifikation (ID) mindestens eines Medieninhaltstroms aus der Vielzahl von Medieninhaltströmen; Anweisungen zum Bewirken, auf einer Anzeigeschnittstelle den ausgewählten mindestens einen Medieninhaltstrom der Vielzahl von Medieninhaltströmen anzuzeigen, **dadurch gekennzeichnet, dass** jeder Medieninhaltstrom der Vielzahl von Medieninhaltströmen einem entsprechenden Symbol zugewiesen ist, wobei die eindeutige Identifikation eine Kette dieser Symbole ist, wobei die Auswahl eine Schaltfolge ist, die einem Umschalten zwischen Medieninhaltströmen in einer Reihenfolge entspricht, die jedem aufeinanderfolgenden Symbol der eindeutigen Identifikation entspricht.

12. Nicht transitorisches maschinenlesbares Speichermedium nach Anspruch 11, wobei die Signalisierungsinformationen Programmidentifikations-, (PID)-Informationen beinhalten.

13. Nicht transitorisches maschinenlesbares Speichermedium nach Anspruch 11, wobei die eindeutige Wiedergabe eine sichtbare Fingerabdruckmarkierung beinhaltet, die in einem Bereich innerhalb eines visuellen Inhalts des ausgewählten mindestens einen Medieninhaltstroms zusammengesetzt ist.

14. Nicht transitorisches maschinenlesbares Speichermedium nach Anspruch 11, wobei die eindeutige Wiedergabe eine Fingerabdruckmarkierung beinhaltet, die während der Zeitpunkte von Übergängen innerhalb eines visuellen Inhalts des ausgewählten mindestens einen Medieninhaltstroms zusammengesetzt ist.

15. Nicht transitorisches maschinenlesbares Speichermedium nach Anspruch 11, wobei die Signalisierungsinformationen zur Entschlüsselung durch den Empfänger verschlüsselt sind.

16. Nicht transitorisches maschinenlesbares Speichermedium nach Anspruch 11, wobei die Anweisungen zur Auswahl mindestens eines Medieninhaltstroms der Vielzahl von Medieninhaltströmen Anweisungen zur Auswahl von zwei oder mehr der Vielzahl von Medieninhaltströmen beinhalten.

## Revendications

1. Procédé de traitement de contenu média, comprenant :
la réception, en utilisant un récepteur (102, 202 ou 404) associé à un identifiant (ID) unique, d'un signal de données incluant une pluralité de flux de contenu média d'un même événement et des informations de signalisation,
dans lequel chaque flux de contenu média de la pluralité des flux de contenu média inclut un rendu visuellement unique du flux de contenu média ; la sélection, en utilisant le récepteur, sur la base des informations de signalisation et de l'identifiant (ID) unique, d'au moins un flux de contenu média de la pluralité de flux de contenu média ; et la fourniture, à une interface d'affichage, de l'au moins un flux de contenu média sélectionné de la pluralité de flux de contenu média,
**caractérisé en ce que**, chaque flux de contenu média de ladite pluralité de flux de contenu média étant assigné à un symbole correspondant, l'identifiant unique étant une chaîne de ces symboles, ladite sélection est une séquence de commutation correspondant à un basculement entre des flux de contenu média dans un ordre correspondant à chaque symbole successif de l'identifiant unique.

2. Procédé selon la revendication 1, dans lequel les informations de signalisation incluent des informations d'identifiant de programme (PID).

3. Procédé selon la revendication 1, dans lequel le rendu visuellement unique inclut l'incorporation d'une marque d'empreinte digitale visible composée dans une zone à l'intérieur d'un contenu visuel de l'au moins un flux de contenu média sélectionné.

4. Procédé selon la revendication 1, dans lequel le rendu unique inclut une marque d'empreinte digitale composée pendant les emplacements temporels de transitions à l'intérieur d'un contenu visuel de l'au moins un flux de contenu média sélectionné.

5. Procédé selon la revendication 1, dans lequel les informations de signalisation sont chiffrées pour un déchiffrement par le récepteur.

6. Procédé selon la revendication 1, dans lequel la sélection d'au moins un flux de contenu média de la pluralité de flux de contenu média inclut la sélection de deux ou plus de la pluralité de flux de contenu média.

7. Appareil (600) pour traiter un contenu média, comprenant : un module (602) qui reçoit un premier contenu média ; un module (604) qui reçoit un second contenu média ; un module combinateur (606) qui combine le premier contenu média avec le second contenu média ; un module de commande (608) qui reçoit un signal de commande et commande, en utilisant le signal de commande, le fonctionnement du module combinateur et un module de génération de sortie (610) ; dans lequel le module de génération de sortie (610) produit un rendu visuellement unique du premier contenu média et du second contenu média sous la commande du module de commande ; et un module d'interface d'affichage (612) qui délivre le signal vidéo de sortie à une interface d'affichage, **caractérisé en ce que**, chaque flux de contenu média de ladite pluralité de flux de contenu média étant assigné à un symbole correspondant, l'identifiant unique étant une chaîne de ces symboles, ladite sélection est une séquence de commutation correspondant à un basculement entre des flux de contenu média dans un ordre correspondant à chaque symbole successif de l'identifiant unique.

8. Appareil (600) selon la revendication 7, dans lequel le premier contenu média est un programme vidéo et dans lequel le rendu visuellement unique inclut une marque visible composée dans une zone d'affichage à l'intérieur du premier contenu média, comme spécifié par le signal de commande.

9. Appareil (600) selon la revendication 7, dans lequel le module de commande (608) reçoit le signal de commande dans un format chiffré.

10. Appareil (600) selon la revendication 7, dans lequel le signal de commande inclut un signal pour activer et désactiver la combinaison du premier contenu média et du second contenu média.

11. Support de stockage lisible par machine non transitoire encodé avec des instructions pour traiter un contenu média, comprenant : des instructions pour recevoir, en utilisant un récepteur (102, 202 ou 404) associé à un identifiant (ID) unique, un signal de données incluant une pluralité de flux de contenu média d'un même événement et des informations de signalisation, dans lequel chaque flux de contenu média de la pluralité des flux de contenu média inclut un rendu visuellement unique du flux de contenu média ; des instructions pour sélectionner, en utilisant le récepteur, sur la base des informations de signalisation et de l'identifiant (ID) unique, au moins un flux de contenu média de la pluralité de flux de contenu média ; des instructions pour amener à afficher, sur une interface d'affichage, l'au moins un flux de contenu média sélectionné de la pluralité de flux de contenu média, **caractérisé en ce que**, chaque flux de contenu média de ladite pluralité de flux de contenu média étant assigné à un symbole correspondant, l'identifiant unique étant une chaîne de ces symboles, ladite sélection est une séquence de commutation correspondant à un basculement entre des flux de contenu média dans un ordre correspondant à chaque symbole successif de l'identifiant unique.

12. Support de stockage lisible par machine non transitoire selon la revendication 11, dans lequel les informations de signalisation incluent des informations d'identifiant de programme (PID).

13. Support de stockage lisible par machine non transitoire selon la revendication 11, dans lequel le rendu unique inclut une marque d'empreinte digitale visible composée dans une zone à l'intérieur d'un contenu visuel de l'au moins un flux de contenu média sélectionné.

14. Support de stockage lisible par machine non transitoire selon la revendication 11, dans lequel le rendu unique inclut une marque d'empreinte digitale composée pendant les emplacements temporels de transitions à l'intérieur d'un contenu visuel de l'au moins un flux de contenu média sélectionné.

15. Support de stockage lisible par machine non transitoire selon la revendication 11, dans lequel les informations de signalisation sont chiffrées pour un déchiffrement par le récepteur.

16. Support de stockage lisible par machine non transitoire selon la revendication 11, dans lequel les instructions pour sélectionner au moins un flux de contenu média de la pluralité de flux de contenu média incluent des instructions pour sélectionner deux ou plus de la pluralité de flux de contenu média.
